(19) Europäisches Patentamt
European Patent Office
Office européen des brevets

(11) EP 3 048 132 A1

(12) # EUROPEAN PATENT APPLICATION

(43) Date of publication:
**27.07.2016 Bulletin 2016/30**

(21) Application number: **16160104.2**

(22) Date of filing: **16.02.2012**

(51) Int Cl.:
***C08K 3/22*** (2006.01) ***C08L 63/00*** (2006.01)
***C08G 59/30*** (2006.01) ***C08G 59/32*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.02.2011 JP 2011030947**

(62) Document number(s) of the earlier application(s) in accordance with Art. 76 EPC:
**12747218.1 / 2 676 983**

(71) Applicant: **Mitsubishi Rayon Co., Ltd.**
**Tokyo 100-8253 (JP)**

(72) Inventors:
- **Tomioka, Masao**
  **Aichi, 440-8601 (JP)**
- **Kaneko, Manabu**
  **Aichi, 440-8601 (JP)**
- **Mitani, Kazutami**
  **Tokyo, 100-8253 (JP)**

(74) Representative: **Hoffmann Eitle**
**Patent- und Rechtsanwälte PartmbB**
**Arabellastraße 30**
**81925 München (DE)**

Remarks:
This application was filed on 14-03-2016 as a divisional application to the application mentioned under INID code 62.

(54) **PREPREG AND FIBER-REINFORCED COMPOSITE MATERIAL**

(57) The present invention relates to a prepreg obtained by impregnating an epoxy resin composition containing a phosphorus compound and an aluminum hydroxide into reinforcement fibers, wherein the median particle size of the aluminum hydroxide is no more than the diameter of the reinforcement fiber. According to the invention, it is also possible to provide a fiber-reinforced composite material obtained by curing the prepreg.

EP 3 048 132 A1

## Description

TECHNICAL FIELD

The present invention relates to an epoxy resin composition, prepreg and fiber-reinforced composite material. The present application claims priority based on Japanese Patent Application No. 2011-030947 which was filed in Japan on 16 February 2011, the content of which is incorporated herein by reference.

BACKGROUND ART

Fiber-reinforced composite materials produced by combining a reinforcement fiber with resin have been used in various applications due to excelling in lightweight properties, rigidity, impact resistance or the like. As a production method of fiber-reinforced composite materials, a method of curing a prepreg produced by impregnating a thermosetting resin such as epoxy resin into reinforcement fibers has generally been employed.

Depending on the application, flame retardance is demanded in the fiber-reinforced composite material. Conventionally, as a flameproofing method of fiber-reinforced composite materials, a method of blending halogen-based flame retardant such as a brominated epoxy resin into a matrix resin of the composite material has come to be widely employed. However, halogen-based flame retardants have problems such as gas evolving during combustion, and thus a substitute technology thereof has come to be researched to be adopted.

As flameproofing methods substituting halogen-based flame retardants, methods of adding red phosphorus or phosphoric acid ester compounds to a matrix resin have become mainstream (for example, Patent Document 1).

Prior Art Reference

Patent Document 1: PCT International Application, Publication No. 2005/082982

DISCLOSURE OF THE INVENTION

Problems to be Solved by the Invention

However, a method of adding red phosphorus or phosphoric acid ester compounds to a matrix resin has problems such as: 1) mechanical strength declining; 2) poor storage stability; 3) red phosphorus or phosphoric acid ester compounds gradually seeping over a long time period; or 4) since red phosphorus and phosphoric acid ester compounds are easily hydrolyzed, use is difficult in printed circuit boards, electronic materials, etc. in which insulation property and water resistance are highly demanded.

As a common flameproofing method of resins, there is a method of adding an inorganic flame retardant such as a metal hydroxide. However, when the added amount of inorganic flame retardant is increased, a problem arises in that the mechanical strength of the resin declines. The decline in the mechanical strength of a resin causes a decline in the mechanical strength of the fiber-reinforced composite material.

It is difficult to obtain sufficient flame retardancy with an added amount on the order that maintains the mechanical strength demanded in the fiber-reinforced composite material.

The present invention has been made taking the above matters into account, and has an object of providing an epoxy resin composition that can obtain a composite material having superior flame retardance without containing halogen-based flame retardants, red phosphorus and phosphoric acid ester, and a prepreg, as well as a fiber-reinforced composite material obtained using the prepreg.

Means for Solving the Problems

As a result of thorough investigation, the present inventors have found that superior flame retardancy is imparted by blending specific amounts of a specific phosphorus-containing modified epoxy resin (A) and metal hydroxide (D), respectively, into an epoxy resin composition.

The present invention has been made based on the above knowledge, and has the following aspects.

(1) One aspect of the present invention relates to an epoxy resin composition comprising: a phosphorus-containing modified epoxy resin (A) consisting of a compound (a) represented by the following Formula (a); a novolak epoxy resin (B); a hardener (C) for epoxy resins; and a metal hydroxide (D), in which a mass content $C_A$% of the phosphorus-containing modified epoxy resin (A) and mass content $C_D$% of the metal hydroxide (D) relative to total amount of the epoxy resin composition satisfy the following Formulas (1), (2) and (3),

$$(1)\ 2.5C_A+C_D \geqq 45$$

$$(2)\ 6 \leqq C_A \leqq 40$$

$$(3)\ 3 \leqq C_D \leqq 30$$

[Chemical Formula 1]

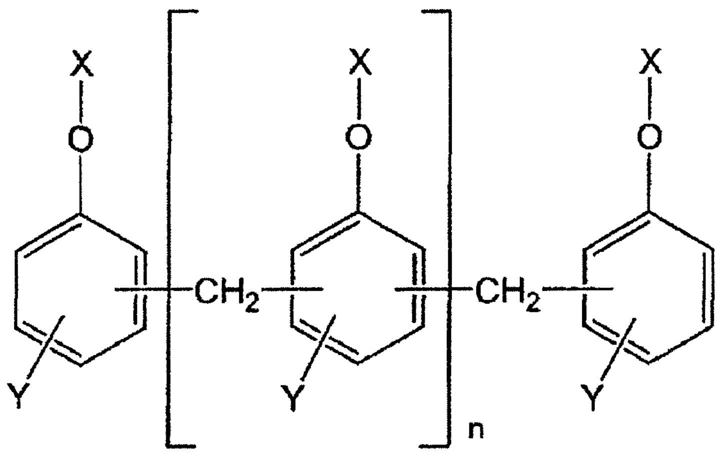

・・・(a)

n is an integer of at least 0,

X is a group represented by the following Formula (I), (II) or (III), (n+2) number of X in the Formula may be the same or different from each other,

with the proviso that at least one X among the (n+2) number of X is a group represented by the Formula (I) or (II), and

Y is -H or $CH_3$, and (n+2) number of Y in the Formula may be the same or different from each other.

[Chemical Formula 2]

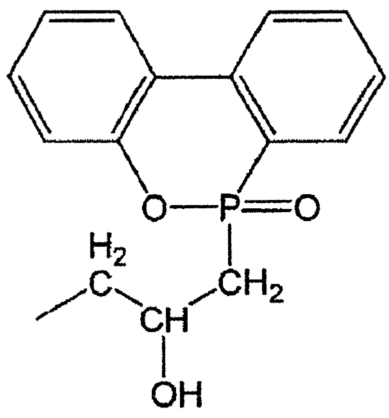

・・・ (I)

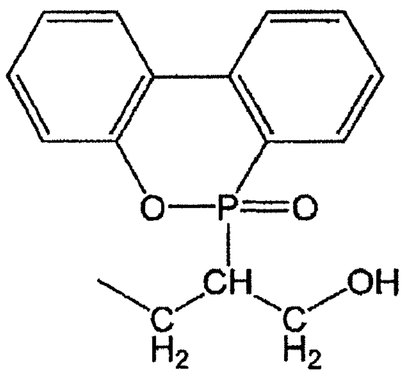

・・・ (II)

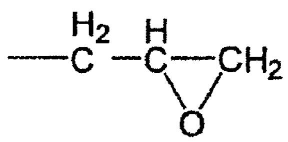

・・・ (III)

(2) Another aspect of the present invention relates to the epoxy resin composition according to (1), further comprising a trisphenolmethane epoxy resin (E).

(3) Yet another aspect of the present invention relates to the epoxy resin composition according to (1) or (2), in which the metal hydroxide (D) is aluminum hydroxide.

(4) Yet another aspect of the present invention relates to a prepreg obtained by impregnating the epoxy resin composition according to (1), (2) or (3) into reinforcement fibers.

(5) Yet another aspect of the present invention relates to a fiber-reinforced composite material obtained by curing the prepreg according to (4).

In other words, the present invention relates to the following.

(1) An epoxy resin composition comprises: a phosphorus-containing modified epoxy resin (A) consisting of a compound (a) represented by the following Formula (a); a novolak epoxy resin (B); a hardener (C) for epoxy resins; and a metal hydroxide (D), in which a mass content $C_A$% of the phosphorus-containing modified epoxy resin (A) and mass content $C_D$% of the metal hydroxide (D) relative to total amount of the epoxy resin composition satisfy the following Formulas (1), (2) and (3),

(1) $2.5C_A+C_D \geqq 45$

(2) $6 \leqq C_A \leqq 40$

(3) $3 \leqq C_D \leqq 30$

[Chemical Formula 3]

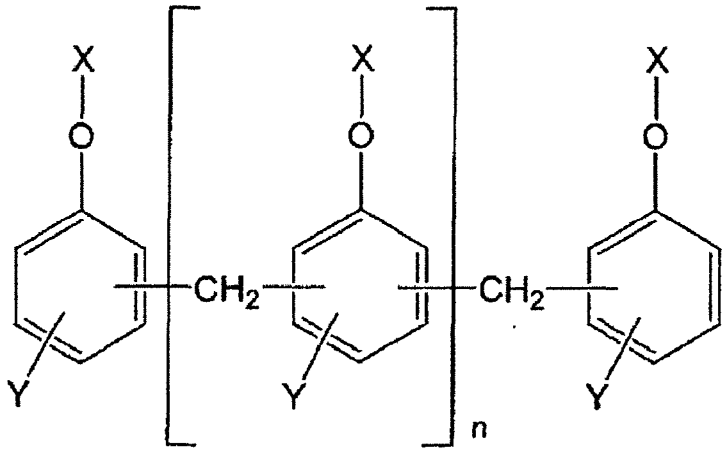

・・・(a)

in which n is an integer of at least 0,
X is a group represented by the following Formula (I), (II) or (III), (n+2) number of X in the Formula may be the same or different from each other,
with the proviso that at least one X among the (n+2) number of X is a group represented by the Formula (I) or (II), and
Y is -H or $CH_3$, and (n+2) number of Y in the Formula may be the same or different from each other.

[Chemical Formula 4]

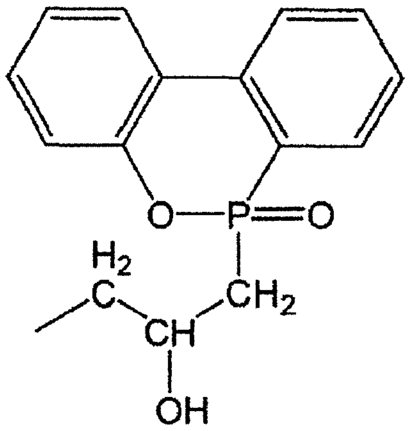

· · · (I)

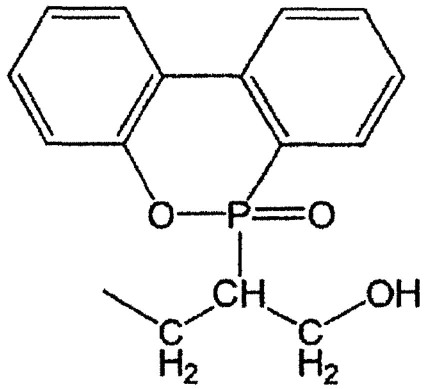

· · · (II)

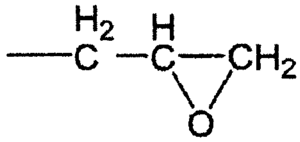

· · · (III)

(2) The epoxy resin composition according to (1) further comprises a trisphenolmethane epoxy resin (E).

(3) The epoxy resin composition according to (1) or (2), in which the metal hydroxide (D) is an aluminum hydroxide.

(4) A prepreg obtained by impregnating the epoxy resin composition according to any one of (1) to (3) into reinforcement fibers.

(5) The prepreg according to (4), wherein the epoxy resin composition further comprises a trisphenolmethane epoxy resin (E).

(6) The prepreg according to (4) or (5), wherein the metal hydroxide (D) is an aluminum hydroxide.

(7) The prepreg according to (6), wherein the median particle size of the aluminum hydroxide is no more than the diameter of the reinforcement fiber.

(8) A fiber-reinforced composite material obtained by curing the prepreg according to any one of (4) to (7).

(9) A prepreg obtained by impregnating an epoxy resin composition containing a phosphorus compound and an aluminum hydroxide into reinforcement fibers, wherein the median particle size of the aluminum hydroxide is no more than the diameter of the reinforcement fiber.

(10) A fiber-reinforced composite material obtained by curing the prepreg according to (9).

Effects of the Invention

According to the present invention, it is possible to provide an epoxy resin composition that can obtain a composite material having superior flame retardance without containing halogen-based flame retardants, red phosphorus and phosphoric acid esters, and a prepreg, as well as a fiber-reinforced composite material obtained using the prepreg.

BRIEF DESCRIPTION OF THE DRAWINGS

FIG. 1 is a graph showing the relationship between $C_A$ and $C_D$ for each of Examples 1 to 12 and Comparative Examples 1 to 7; and

FIG. 2 is a schematic view relating to the extrapolation of data for metal hydroxides that can be preferably used in the present invention, performed in order to obtain a lower limit for the median particle size thereof.

PREFERRED MODE FOR CARRYING OUT THE INVENTION

Hereinafter, the present invention will be explained in detail.

Epoxy Resin Composition

An epoxy resin composition of the present invention contains the following phosphorus-containing modified epoxy resin (A), a novolak epoxy resin (B), a hardener (C) for epoxy resins, and a metal hydroxide (D).

In the present disclosure and the claims, "an epoxy resin" is a resin compound having at least one epoxy group.

Phosphorus-containing Modified Epoxy Resin (A)

The phosphorus-containing modified epoxy resin (A) consists of a compound (a) represented by the following Formula (a).

[Chemical Formula 5]

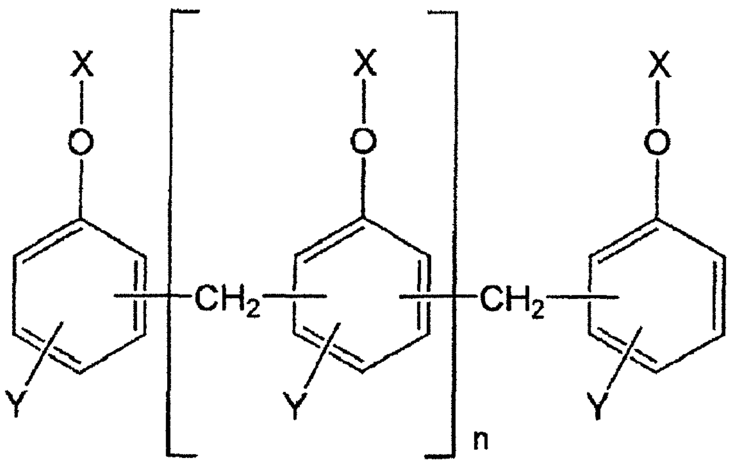

... (a)

In the formula, n is an integer of at least 0. X is a group represented by the following Formula (I), (II) or (III), and (n+2) number of X in the Formula may be the same or different. However, at least one X among the (n+2) number of X is a group represented by the Formula (I) or (II). Y is -H or $CH_3$, and (n+2) number of Y in the Formula may be the same or different.

[Chemical Formula 6]

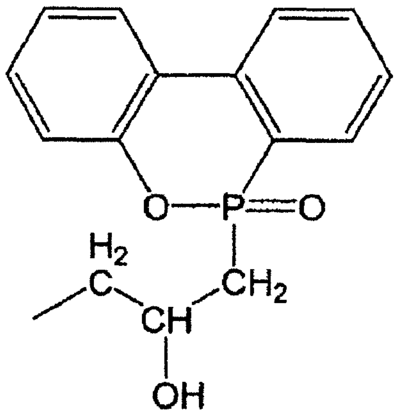

・・・(I)

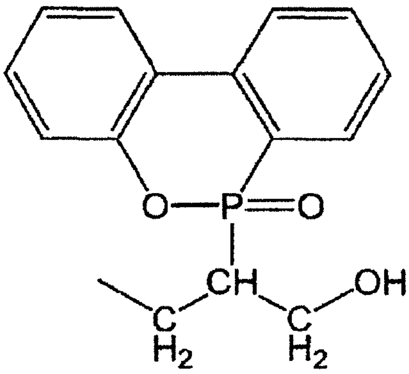

・・・(II)

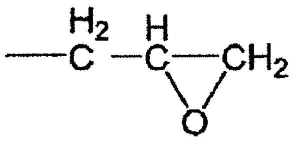

・・・(III)

In Formula (a), n is an integer of at least 0, an integer of 0 to 10 being preferable, and an integer of 0 to 5 being more preferable. So long as no more than 10, it will excel in balance of heat resistance and flowability.

The phosphorus-containing modified epoxy resin (A) may be configured from only a compound in which a part of the (n+2) number of X in the Formula (a) is a group represented by Formula (I) or (II), and a part is a group represented by Formula (III), or may be configured from only a compound in which all of the (n+2) number of X in Formula (a) are groups represented by Formula (I) or (II), or may be a mixture of a compound in which a part of the (n+2) number of X in the Formula (a) is a group represented by Formula (I) or (II), and a part is a group represented by Formula (III), and a compound in which all of the (n+2) number of X in Formula (a) are groups represented by Formula (I) or (II).

The phosphorus content of the phosphorus-containing modified epoxy resin (A) is preferably 1 to 8% by mass. The flame retardance of the cured product of the epoxy resin composition improves with higher phosphorus content, and the flame retardance of the composite material obtained using this epoxy resin composition improves. The heat resistance of the cured product of the epoxy resin composition improves with lower phosphorus content, and the heat resistance of the composite material obtained using this epoxy resin composition improves.

As the phosphorus-containing modified epoxy resin (A), commercial products may be used, or those synthesized by a known production method may be used.

As the commercial product, for example, FX-289FA manufactured by Nippon Steel Chemical Co., Ltd. can be exemplified.

As the production method of the phosphorus-containing modified epoxy resin (A), for example, a method of reacting a compound represented by the following Formula (c) (9,10-dihydro-9-oxa-10- phosphaphenanthrene-10-oxide) with an epoxy resin (e.g., phenol novolak epoxy resin or cresol novolak epoxy resin) in which all of the (n+2) number of X in the Formula (a) are groups represented by the Formula (III), at high temperature under the presence of catalyst.

[Chemical Formula 7]

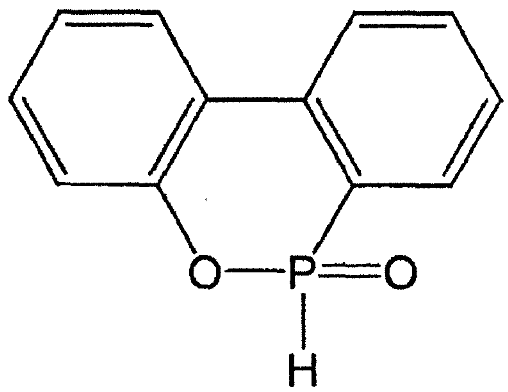

• • • (c)

The compound (a) constituting the phosphorus-containing modified epoxy resin (A) contained in the epoxy resin composition may be one, two or more types.

The mass content $C_A$ (%) of the phosphorus-containing modified epoxy resin (A) relative to the total amount (mass) of epoxy resin composition is preferably at least 6% to no more than 40%, and more preferably at least 10% to no more than 35%.

By the $C_A$ being at least 6%, it is possible to impart sufficient flame retardancy due to the synergy with the metal hydroxide (D) described later. In addition, by the $C_A$ being no more than 40%, it is possible to impart suitable curability and viscosity to the epoxy resin composition.

In addition, for the blended amount of phosphorus-containing modified epoxy resin (A) in the epoxy resin composition of the present invention, a blended amount is preferable that makes the phosphorus atom content relative to the overall mass of the composition at least 0.7% by mass to no more than 2.4% by mass, and a blended amount that makes it at least 1.0% by mass to no more than 2.4% by mass is more preferable. By setting to at least 0.7% by mass, it is possible to impart sufficient flame retardancy. In addition, by setting to no more than 2.4% by mass, it is possible to maintain the heat resistance of the cured product of the epoxy resin composition and the composite material obtained using this epoxy resin composition.

Metal Hydroxide (D)

The metal hydroxide (D) is not particularly limited, and a known metal hydroxide can be used as an inorganic flame retardant. As such a metal hydroxide, aluminum hydroxide, magnesium hydroxide or the like can be exemplified. Thereamong, aluminum hydroxide is preferable from the aspect of thermal decomposition temperature and endothermic energy amount during decomposition.

As the metal hydroxide (D), normally a granular one is used. In particular, in the case of using the epoxy resin composition of the present invention by impregnating into reinforcement fibers, from the viewpoint of dispersibility, the median particle size of the metal hydroxide (D) being no more than the diameter of the reinforcement fiber is preferable in the aspect of being able to achieve both high flame retardancy and high mechanical property, and the median particle size is more preferably at least 0.2 μm and no more than the diameter of the reinforcement fiber. In addition, the median particle size is more preferably at least 0.8 μm to no more than the diameter of the reinforcement fiber, and particularly preferably at least 1.0 μm to no more than 5.5 μm. The median particle size is a value measured by laser diffractometry.

In addition, the free moisture of the metal hydroxide (D) being no more than 0.5% by mass is more preferable in the aspect of being able to suppress secondary aggregation, and the free moisture being at least 0.05% by mass is further preferable due to imparting flame retardance. In other words, so long as the range of free moisture is preferably at least 0.05% by mass to no more than 0.5% by mass, more preferably at least 0.07% by mass to no more than 0.17% by mass, it is further preferable due to being able to achieve both high flame retardancy and high dispersibility.

The free moisture of the metal hydroxide (D) was calculated based on JIS R 9301. In other words, after a sample measured for mass beforehand (d1) was dried for 2 hours at 110°C, the mass was measured (d2), and the free moisture (% by mass) was calculated from the amount of decrease after drying

$$(=(d1-d2)/d1 \times 100).$$

The diameter of the reinforcement fiber is a value measured according to an image analysis method employing SEM images.

As desired, surface treatment may be conducted on the metal hydroxide (D). As the surface treatment, surface treatment using stearic acid, surface treatment using a coupling agent, or the like can be exemplified.

As the metal hydroxide (D), commercial products may be used, or those synthesized by a known production method may be used. For example, as a commercial aluminum hydroxide, C-303, C-301, C-300GT, C-305, C-3250 or CM-450 manufactured by Sumitomo Chemical Company; HIGILITE H-42 or H-43 manufactured by Showa Denko Co.; or the like can be exemplified.

In addition, as a commercial magnesium hydroxide, MAGSTAR #5, #4, #2, ECOMAG PZ-1 or Z-10 manufactured by Tateho Chemical Industries Co., Ltd.; or the like can be exemplified.

The metal hydroxide (D) contained in the epoxy resin composition may be one type, or two or more types.

The mass content $C_D$ (%) of the metal hydroxide (D) relative to the total amount (mass) of the epoxy resin composition is preferably at least 3% to no more than 30%, and more preferably at least 5% to no more than 25%. By the $C_D$ being at least 3%, it is possible to impart sufficient flame retardancy due to the synergy with the phosphorus-containing modified epoxy resin (A). In addition, by the $C_D$ being no more than 30%, it is possible to impart appropriate viscosity or handling properties to the epoxy resin composition. If the $C_D$ exceeds 30%, production of the prepreg described later will become difficult.

In the epoxy resin composition of the present invention, in addition to the $C_A$ being at least 6% to no more than 40% and the $C_D$ being at least 3% to no more than 30% as mentioned above, it is necessary for $2.5C_A+C_D$ to be at least 45. It is thereby possible to impart sufficient flame retardancy. In the case of $2.5C_A+C_D$ being less than 45, the flame retardancy will be insufficient, even if $C_A$ and $C_D$ are within the respective above-mentioned ranges.

Novolak Epoxy Resin (B)

The novolak epoxy resin (B) is not particularly limited so long as not containing phosphorus; however, at least one resin selected from the group consisting of phenol novolak epoxy resin and cresol novolak epoxy resin is suitable. These epoxy resins excel in flame retardance due to the chemical structure.

The novolak epoxy resin (B) contained in the epoxy resin composition may be one type or two or more types.

In the epoxy resin composition, the blended amount of the novolak epoxy resin (B) is preferably at least 15 parts by mass to no more than 65 parts by mass, more preferably at least 20 parts by mass to no more than 55 parts by mass, and further preferably at least 25 parts by mass to no more than 50 parts by mass, as an amount relative to 100 parts by mass of the epoxy resin composition.

Trisphenolmethane Epoxy Resin (E)

The epoxy resin composition of the present invention may contain a trisphenolmethane epoxy resin (E) in partial substitution of the novolak epoxy resin (B). The trisphenolmethane epoxy resin (E) excels in flame retardance due to the chemical structure, similarly to the novolak epoxy resin (B).

As the trisphenolmethane epoxy resin (E), for example, a glycidyl ether of tris(hydroxyphenyl)methane or the like can be exemplified.

The trisphenolmethane epoxy resin (E) contained in the epoxy resin composition may be one type, or two or more types.

In the epoxy resin composition, the blended amount of the trisphenolmethane epoxy resin (E) is preferably at least 10 parts by mass to no more than 30 parts by mass, and more preferably at least 15 parts by mass to no more than 25 parts by mass, as an amount relative to 100 parts by mass of the epoxy resin composition.

Other Epoxy Resin (G)

The epoxy resin composition of the present invention can contain an other epoxy resin (G) other than the phosphorus-containing modified epoxy resin (A), novolak epoxy resin (B), and trisphenolmethane epoxy resin (E) as desired within a range not harming the effects of the present invention.

As such an epoxy resin (G), for example, a bisphenol epoxy resin, glycidylamine epoxy resin, aminophenol epoxy resin, naphthalene epoxy resin, isocyanate modified epoxy resin or the like can be exemplified. Any one of these may be used independently, or two or more types may be jointly used. Thereamong, a bisphenol epoxy resin is preferable.

## Hardener (C) for Epoxy Resins

The hardener (C) for epoxy resins may be of any structure so long as being able to cure epoxy resin, and a known hardener is applicable. As specific examples, amine, acid anhydride, novolak resin, phenol, mercaptan, Lewis acid amine complex, onium salt, imidazole, or the like can be exemplified.

Among the above listed, an amine-based hardener is preferable. As an amine-based hardener, for example, aromatic amines such as diaminodiphenylmethane or diaminodiphenyl sulfone, aliphatic amines, imidazole derivatives, dicyandiamide, tetramethylguanidine, thiourea-added amine or the like, and isomers or modified forms of these can be employed. Thereamong, dicyandiamide is particularly preferable due to excelling in the storage stability of a prepreg.

The blended amount of the hardener (C) for epoxy resins in the epoxy resin composition is preferably an amount such that the ratio of "active hydrogen equivalents of hardener (C) for epoxy resins" to "epoxy equivalents of the epoxy resin composition in state excluding hardener (C) for epoxy resins" becomes 0.5 to 1. The ratio is more preferably 0.6 to 0.8. The epoxy resin composition can be sufficiently cured by setting to at least 0.5. The toughness of the cured product can be raised by setting to no more than 1.

## Hardening Accelerator (F)

The epoxy resin composition of the present invention may contain a hardening accelerator (F) as desired in a range not harming the effects of the present invention. The hardening accelerator (F) is not particularly limited so long as being one having an effect of accelerating the curing reaction by the epoxy resin hardener (C) used.

For example, in the case of the hardener (C) for epoxy resins being dicyandiamide, then a urea derivative such as 3-phenyl-1,1-dimethylurea, 3-(3,4-dichlorophenyl)-1,1-dimethylurea (DCMU), 3-(3-chloro-4-methylphenyl)-1,1-dimethylurea, or 2,4-bis(3,3-dimethyl ureide)toluene is preferable as the hardening accelerator (F). In addition, in the case of the hardener (C) for epoxy resins being an acid anhydride or novolak resin, a tertiary amine is preferable as the hardening accelerator (F). In addition, in the case of the hardener (C) for epoxy resins being diaminodiphenyl sulfone, an imidazole compound or a urea compound such as phenyldimethylurea (PDMU); or an amine complex such as a monoethylamine trifluoride or amine trichloride complex is preferable as the hardening accelerator (F). Thereamong, a combination of dicyandiamide and DCMU is particularly preferable.

## Thermoplastic Resin (H)

The epoxy resin composition of the present invention may contain a thermoplastic resin as desired, in a range not harming the effects of the present invention.

The type of thermoplastic resin is not particularly limited and, for example, phenoxy, polyamide, polyester, polycarbonate, polyethersulfone, polyphenylene ether, polyphenylene sulfide, polyetheretherketone, polyetherketoneketone, polyimide, polytetrafluoroethylene, polyether, polyolefin, crystalline polymer, polyarylate, polysulfone, polyacrylonitrile styrene, polystyrene, polyacrylonitrile, polmethylmethacrylate, ABS, AES, ASA, polyvinyl chloride, polyvinyl formal, or the like can be exemplified. Any one of these may be used individually, or two or more types may be jointly used.

Among the above listed, from the aspect of excelling in heat resistance of the cured product or toughness, at least one resin selected from the group consisting of polyethersulfone, polyetheretherketone and polyvinyl formal is preferable.

## Additives

The epoxy resin composition of the present invention may contain various known additives as desired, within a range not harming the effects of the present invention. As the additives, for example, mold release agents such as silicone oil, natural waxes, synthetic waxes, metal salts of linear fatty acids, acid amide, esters, or paraffins; inorganic fillers such as powders of crystalline silica, fused silica, calcium silicate, alumina, calcium carbonate, talc, barium sulfate, etc., glass fibers, or carbon fibers; pigments such as carbon black or red iron oxide; silane coupling agents; and the like can be exemplified. Any one of these may be used individually, or two or more types may be jointly used.

## Preparation Method of Epoxy Resin Composition

The epoxy resin composition of the present invention can be prepared by mixing each of the above-mentioned components. As a method of mixing each component, a method utilizing a mixer such as a three-roll mill, planetary mixer, kneader, all-purpose mixer, homogenizer or homodispenser can be exemplified.

Prepreg

One aspect of the present invention relates to a prepreg obtained by impregnating an epoxy resin composition containing metal hydroxide into reinforcement fibers, in which the median particle size of the metal hydroxide is no more than the diameter of the reinforcement fiber.

Another aspect of the present invention relates to a prepreg obtained by impregnating an epoxy resin composition containing a phosphorus compound and aluminum hydroxide into reinforcement fibers, in which the median particle size of the aluminum hydroxide is no more than the diameter of the reinforcement fiber.

Aluminum Hydroxide

In the prepreg of the present invention, in the case of the metal hydroxide being aluminum hydroxide, if the median particle size of the aluminum hydroxide is no more than the diameter of the reinforcement fiber, it is considered that the aluminum hydroxide particles will be able to slip between the reinforcement fibers upon impregnating the epoxy resin composition containing aluminum hydroxide particles into the reinforcement fibers. It thereby becomes possible to cause the aluminum hydroxide particles to disperse over the entire prepreg, and is preferable due to preventing a decline in the mechanical characteristics or a decline in flame retardancy due to aggregation of the aluminum hydroxide particles, and being able to achieve both high flame retardancy and high mechanical characteristics. In addition, it is more preferable for the median particle size to be at least 0.2 $\mu$m and no more than the diameter of the reinforcement fiber.

Phosphorus Compound

The phosphorus compound is not particularly limited so long as being one containing a phosphorus atom in the molecule; however, phosphorus-containing compounds such as a phosphoric acid ester, condensed phosphoric acid ester or phosphaphenanthrene-based compounds or red phosphorus is preferably used. These phosphorus compounds can be incorporated into the epoxy resin skeleton during the curing reaction, and can also be dispersed or miscible with the epoxy resin composition.

In the prepreg of the present invention, the content of the epoxy resin composition relative to the total prepreg weight (hereinafter referred to as resin content) is preferably 15 to 50% by mass, more preferably 20 to 45% by mass, and further preferably 25 to 35% by mass. If the resin content is less than 15% by mass, the adhesiveness between the reinforcement fibers and the epoxy resin composition may decline, and if exceeding 50% by mass, the flame retardancy may decline.

The reinforcement fiber is not particularly limited, and may be appropriately selected depending on the application, etc. from among known materials as reinforcement fibers constituting fiber-reinforced composite materials. For example, various inorganic fibers or organic fibers such as carbon fiber, aramid fiber, nylon fiber, high-strength polyester fiber, glass fiber, boron fiber, alumina fiber or silicon nitride fiber can be used. Thereamong, carbon fiber, aramid fiber, glass fiber, boron fiber, alumina fiber or silicon nitride fiber is preferable from the viewpoint of flame retardance, and carbon fiber is particularly preferable from the aspect of excelling in specific strength and elastic ratio.

The carbon fiber preferably has a strand tensile strength measured based on JIS R7601 (1986) of 1.0 to 9.0 GPa and a strand tensile modulus of 150 to 1000 GPa, and more preferably has a strand tensile strength of 1.5 to 9.0 GPa and a strand tensile modulus of 200 to 1000 GPa.

As the diameter of the reinforcement fiber that can be used in the prepreg of the present invention, it is preferable for the diameter to be set on the order of 6 to 8 $\mu$m, particularly if the reinforcement fiber is carbon fiber. Carbon fiber in this range of diameter can be preferably used due to obtaining being generally easy. However, the diameter of the carbon fiber is not limited to the above-mentioned range.

As the form of the carbon fibers, it may be drawn to align in one direction, or may be a cloth or non-crimp fabric.

The prepreg of the present invention can be produced by a known method using the epoxy resin composition of the present invention and reinforcement fibers.

Fiber-reinforced Composite Material

The fiber-reinforced composite material of the present invention is obtained by curing the prepreg.

The fiber-reinforced composite material of the present invention can be produced by a known method using the prepreg of the present invention.

The fiber-reinforced composite material of the present invention has superior flame retardance (for example, flame retardance when preparing a 0.8 mm-thick fiber-reinforced composite material molded plate satisfies V-0 in UL-94V, and the flame retardance when preparing a 3.0 mm-thick fiber-reinforced composite material molded plate satisfies FAR25.853, a-1 Part IV) without containing halogen-based flame retardants, red phosphorus and phosphoric acid esters,

due to the matrix resin being the cured product of the epoxy resin composition of the present invention. Therefore, the fiber-reinforced composite material of the present invention is useful in applications for which high degree flame retardancy is demanded, e.g., in electrical and electronic housing material and materials for aircraft interiors.

In addition, the cured product of the epoxy resin composition of the present invention has sufficient mechanical strength even if containing a metal hydroxide that is an inorganic flame retardant. For this reason, the fiber-reinforced composite material of the present invention is suitable in mechanical characteristics such as flexural property.

In the present invention, the fiber-reinforced composite material preferably is a carbon fiber-reinforced composite material containing carbon fibers as the reinforcement fibers due to excelling in flame retardance and mechanical characteristics.

EXAMPLES

Next, the present invention will be explained in further detail by way of examples.

The raw materials (resin, etc.) used in each of the following examples, production method and evaluation method will be shown below.

I. Raw Materials

As the phosphorus-containing modified epoxy resin (A), novolak epoxy resin (B), hardener (C) for epoxy resins, metal hydroxide (D), trisphenolmethane epoxy resin (E), hardening accelerator (F) or other epoxy resin (G), the products listed in Table 1 were prepared.

[Table 1]

| | Reference number | General name · chemical name | Manufacturer | Product name |
|---|---|---|---|---|
| Phosphorus-containing modified epoxy resin(A) | A-1 | Phosphorus-containing epoxy resin | Nippon Steel Chemical Co., Ltd. | FX-289FA |
| Novolak epoxy resin(B) | B-1 | Liquid phenol novolak epoxy resin | Mitsubishi Chemical Corporation | jER152 |
| | B-2 | Liquid phenol novolak epoxy resin | Nippon Steel Chemical Co., Ltd. | TX-0911 |
| Hardener for epoxy resins(C) | C-1 | Dicyandiamide | Mitsubishi Chemical Corporation | DICY15 |
| Metal hydroxide(D) | D-1 | Aluminum hydroxide | Sumitono Chemical Co., Ltd. | C-301 |
| | D-2 | Aluminum hydroxide | Sumitono Chemical Co., Ltd. | C-300GT |
| | D-3 | Aluminum hydroxide | Sumitono Chemical Co., Ltd. | C-305 |
| | D-4 | Aluminum hydroxide | Sumitono Chemical Co., Ltd. | CM-450 |
| | D-5 | Aluminum hydroxide | Sumitono Chemical Co., Ltd. | C-3250 |
| Trisphenolmethane epoxy resin(F) | E-1 | Trisphenolmethane epoxy resin | Mitsubishi Chemical Corporation | jER1032H60 |
| Hardening accelerator(E) | F-1 | 3-(3,4-dichlorophenyl)-1,1-dimethylurea | Hodogaya Chemical Co., Ltd. | DCMU99 |
| Other epoxy resin(G) | G-1 | Liquid bisphenol A epoxy resin | Mitsubishi Chemical Corporation | jER828 |
| Thermoplastic resin(H) | H-1 | Bisphenol A phenoxy resin | Mitsubishi Chemical Corporation | YP-50S |

Among the raw materials shown in Table 1, the epoxy equivalent (g/eq) of resin (A-1, B-1, B-2, E-1 or G-1) and phosphorus content (% by mass) were as follows, respectively.

A-1: epoxy equivalents 7740 g/eq, phosphorus content 7.4% by mass
B-1: epoxy equivalents 177 g/eq, phosphorus content 0% by mass
B-2: epoxy equivalents 172 g/eq, phosphorus content 0% by mass
E-1: epoxy equivalents 169 g/eq, phosphorus content 0% by mass
G-1: epoxy equivalents 189 g/eq, phosphorus content 0% by mass

The median particle size of D-1 (measured by laser diffractometry) was 1.4 μm and the free moisture was 0.17% by mass;
the median particle size of D-2 (measured by laser diffractometry) was 0.8 μm and the free moisture was 0.40% by mass;
the median particle size of D-3 (measured by laser diffractometry) was 5.5 μm and the free moisture was 0.07% by mass;
the median particle size of D-4 (measured by laser diffractometry) was 11.0 μm and the free moisture was 0.30% by mass;
the median particle size of D-5 (measured by laser diffractometry) was 35.0 μm and the free moisture was 0.20% by mass; and
the active hydrogen equivalents of C-1 were calculated as 21 g/eq from the hydrogen number in the molecular formula and molecular weight.

II. Epoxy Composition Preparation

(EXAMPLE 1)

15 parts by mass of G-1, 7.5 parts by mass of C-1 and 5 parts by mass of F-1 were weighed, then stirred and mixed in a container. This was more finely mixed in a three-roll mixer to obtain a hardener master batch.

16 parts by mass of A-1 and 34 parts by mass of B-2 were weighed, then heated to 150°C using an oil bath to dissolve and mixed in a flask. Subsequently, the epoxy resin composition was obtained by cooling to about 65°C, and adding thereto 38 parts by mass of D-1, 21 parts by mass of B-1, 30 parts by mass of E-1 and the hardener master batch, and then stirring and mixing.

(EXAMPLES 2, 3, 4, 5 and 6)

Epoxy resin compositions were prepared similarly to Example 1, other than changing the compositional ratios as shown in Table 2.

(EXAMPLE 7)

15 parts by mass of G-1, 7.5 parts by mass of C-1 and 5 parts by mass of F-1 were weighed, and then stirred and mixed in a container. This was more finely mixed in a three-roll mixer to obtain a hardener master batch.

4 parts by mass of G-1 and 2 parts by mass of H-1 were weighed, and then heated to 160°C using an oil bath to dissolve and mixed in a flask to obtain a thermoplastic resin master batch.

37 parts by mass of A-1 and 81 parts by mass of B-2 were weighed, then heated to 150°C using an oil bath to dissolve and mixed in another flask. Subsequently, the epoxy resin composition was obtained by cooling to about 65°C, and adding thereto 50 parts by mass of D-1, the hardener master batch and the thermoplastic resin master batch, and then stirring and mixing.

(EXAMPLE 8)

15 parts by mass of G-1, 7.5 parts by mass of C-1 and 5 parts by mass of F-1 were weighed, then stirred and mixed in a container. This was more finely mixed in a three-roll mixer to obtain a hardener master batch.

40 parts by mass of A-1 and 85 parts by mass of B-2 were weighed, then heated to 150°C using an oil bath to dissolve and mixed in a flask. Subsequently, the epoxy resin composition was obtained by cooling to about 65°C, and adding thereto 30 parts by mass of D-1 and the hardener master batch, and then stirring and mixing.

(EXAMPLES 9 and 10)

Epoxy resin compositions were prepared similarly to Example 8, other than substituting the compositional ratios as shown in Table 3.

(EXAMPLES 11 and 12)

Epoxy resin compositions were prepared similarly to Example 8, other than substituting B-2 for B-1 and substituting the compositional ratios as shown in Table 3.

(EXAMPLES 13, 14, 15 and 16)

Epoxy resin compositions were prepared similarly to Example 10, other than substituting D-1 for D-2, D-3, D-4 or D-5, respectively, and substituting the compositional ratios as shown in Table 3.

(COMPARATIVE EXAMPLE 1)

15 parts by mass of G-1, 7.5 parts by mass of C-1 and 5 parts by mass of F-1 were weighed, then stirred and mixed in a container. This was more finely mixed in a three-roll mixer to obtain a hardener master batch.
19.2 parts by mass of A-1 and 40.8 parts by mass of B-2 were weighed, then heated to 150°C using an oil bath to dissolve and mixed in a flask. Subsequently, the epoxy resin composition was obtained by cooling to about 65°C, and adding thereto 44.2 parts by mass of E-1 and the hardener master batch, and then stirring and mixing.

(COMPARATIVE EXAMPLE 2)

15 parts by mass of G-1, 7.5 parts by mass of C-1 and 5 parts by mass of F-1 were weighed, then stirred and mixed in a container. This was more finely mixed in a three-roll mixer to obtain a hardener master batch.
19.2 parts by mass of A-1 and 40.8 parts by mass of B-2 were weighed, then heated to 150°C using an oil bath to dissolve and mixed in a flask. Subsequently, the epoxy resin composition was obtained by cooling to about 65°C, and adding thereto 15 parts by mass of D-1, 44.2 parts by mass of E-1 and the hardener master batch, and then stirring and mixing.

(COMPARATIVE EXAMPLES 3 and 4)

Epoxy resin compositions were obtained similarly to Comparative Example 2, other than substituting the compositional ratios as shown in Table 4.

(COMPARATIVE EXAMPLE 5)

An epoxy resin composition was obtained similarly to Example 1, other than substituting the compositional ratios as shown in Table 4.

(COMPARATIVE EXAMPLE 6)

An epoxy resin composition was obtained similarly to Example 10, other than substituting the compositional ratios as shown in Table 4.

(COMPARATIVE EXAMPLE 7)

An epoxy resin composition was obtained similarly to Example 7, other than substituting the compositional ratios as shown in Table 4.

III. Preparation of Resin Plate

The obtained epoxy resin composition was injected between two glass plates interposing a spacer of 2 mm-thick polytetrafluoroethylene, heated to cure at curing conditions of 2 hours at 130°C with a heating rate of 2°C/min to obtain a 2 mm-thick resin plate.

IV. Preparation of Carbon Fiber Prepreg

(1)

The epoxy resin composition obtained in Example 10 was made into a film by a M-500 Comma Coater manufactured by HIRANO TECSEED Co., Ltd. to manufacture a resin film with a resin basis weight of 48 $g/m^2$ (hot melt film). This resin film was pasted on both sides of carbon fiber TR50S15L manufactured by Mitsubishi Rayon (diameter of obtained single fiber was 6.5 μm by measurement method described later) arranged in parallel by the drum wind technique, and impregnated with a heating roll to obtain a carbon fiber prepreg with a fiber basis weight of 225 $g/m^2$ and resin content of 30%.

A carbon fiber prepreg with a fiber basis weight of 225 $g/m^2$ and resin content of 30% was obtained similarly to the above, except for using the epoxy resin composition obtained in Example 11 in place of the epoxy resin composition obtained in Example 10.

A carbon fiber prepreg with a fiber basis weight of 225 $g/m^2$ and resin content of 30% was obtained similarly to the above, except for using the epoxy resin composition obtained in Example 12 in place of the epoxy resin composition obtained in Example 10.

A carbon fiber prepreg with a fiber basis weight of 225 $g/m^2$ and resin content of 30% was obtained similarly to the above, except for using the epoxy resin composition obtained in Example 13 in place of the epoxy resin composition obtained in Example 10.

A carbon fiber prepreg with a fibers basis weight of 225 $g/m^2$ and resin content of 30% was obtained similarly to the above, except for using the epoxy resin composition obtained in Example 14 in place of the epoxy resin composition obtained in Example 10.

A carbon fiber prepreg with a fiber basis weight of 225 $g/m^2$ and resin content of 30% was obtained similarly to the above, except for using the epoxy resin composition obtained in Example 15 in place of the epoxy resin composition obtained in Example 10.

A carbon fiber prepreg with fibers basis weight of 225 $g/m^2$ and resin content of 30% was obtained similarly to the above, except for using the epoxy resin composition obtained in Example 16 in place of the epoxy resin composition obtained in Example 10.

Upon carrying out the preparation of a carbon fiber prepreg similarly to above, except for using the epoxy resin composition obtained in Comparative Example 6 in place of the epoxy resin composition obtained in Example 11, since the amount of phosphorus-containing modified epoxy resin (A) was great, suitable drape property was not possessed upon making the carbon fiber prepreg.

Upon performing the preparation of a carbon fiber prepreg similarly to above, except for using the epoxy resin composition obtained in Comparative Example 7 in place of the epoxy resin composition obtained in Example 11, since the amount of metal hydroxide (D) was great, a prepreg maintaining the suitable form was not obtained as the carbon fiber prepreg

(2)

The epoxy resin composition obtained in Example 7 was made into film form with an M-500 Comma Coater manufactured by HIRANO TECSEED Co., Ltd. to prepare a resin film with a resin basis weight of 67 $g/m^2$. This resin film was pasted on both sides of carbon fiber fabric TR3110M manufactured by Mitsubishi Rayon, and impregnated with a heating roll to obtain a carbon fiber prepreg with fibers basis weight of 200 $g/m^2$ and a resin content of 40%.

Upon performing the preparation of a carbon fiber prepreg similarly to above, except for using the epoxy resin composition obtained in Comparative Example 7 in place of the epoxy resin composition obtained in Example 7, since the amount of metal hydroxide (D) was great, a prepreg maintaining the appropriate form was not obtained as the carbon fiber prepreg.

V. Diameter of Single Fiber of Carbon Fiber Bundle

(1) Preparation of Sample

A carbon fiber bundle cut to a length of 5 cm was embedded in epoxy resin (EPO MOUNT base resin : EPO MOUNT hardener = 100:9 (mass ratio)), cut to 2 cm to expose a cross-section, and then mirror finished.

(2) Etching Processing of Observed Side

Furthermore, in order to clarify the profile of the fibers, the cross-section of the sample was etching processed by the following method.

Employed equipment: JP-170 Plasma Etching Device, JEOL, Ltd.

Processing conditions: (ambient gas: $Ar/O_2$ = 75/25, plasma output: 50 W, vacuum: about 120 Pa, processing time: 5 min.)

(3) SEM Observation

The cross-sections of the sample obtained by (1) and (2) were observed using an SEM (PHILIPS FEI-XL20), and five images in which at least five fiber cross-sections appeared on the screen were photographed arbitrarily.

(4) Diameter Measurement of Single Fiber of Carbon Fiber Bundle

For each sample, 20 single fiber cross-sections were arbitrarily selected from five SEM images, provided that at least 3 were from one image, the profile of the fiber cross-section was traced using image analysis software (tradename: Image-Pro PLUS, manufactured by Nippon Roper K. K.), and the diameter d of the cross-section was measured. The average of the diameter d of all selected single fiber cross-sections was defined as the diameter Di of a single fiber in the carbon fiber bundle.

VI. Preparation of 0.8 mm-thick Carbon Fiber Composite Material Plate

The obtained carbon fiber prepreg was cut to a size of 150 mm x 150 mm, four pieces were piled so that the fiber orientations were 0°/90°/90°/0°, and cured in an autoclave at conditions of 130°C x 90 minutes, heating rate of 2°C/min and pressure of 0.6 MPa to obtain a 0.8 mm-thick carbon fiber composite material plate ([0/90]s).

VII. Preparation of 2.0 mm-thick Carbon Fiber Composite Material Plate

The obtained carbon fiber prepreg was cut to a size of 200 mm x 200 mm, ten pieces were piled so that the fiber orientations were 0°/0°/0°/0°/0°/0°/0°/0°/0°/0°, and cured in an autoclave at conditions of 130°C x 90 minutes, heating rate of 2°C/min and pressure of 0.6 MPa to obtain a 0.2 mm-thick carbon fiber composite material plate ([0°/0°/0°/0°/0°/0°/0°/0°/0°/0°]).

VIII. Preparation of 3.0 mm-thick Carbon Fiber Composite Material Plate

The obtained carbon fiber prepreg was cut to a size of 320 mm x 320 mm, fifteen pieces were piled so that the fiber orientations were 0°/90°/0°/90°/0°/90°/0°/90°/0°/90°/0°/90°/0°/90°/0°, and cured in an autoclave at conditions of 130°C x 90 minutes, heating rate of 2°C/min and pressure of 0.6 MPa to obtain a 3.0 mm-thick carbon fiber composite material plate ([0°/90°/0°/90°/0°/90°/0°/90°/0°/90°/0°/90°/0°/90°/0°]).

IX. Evaluation

(1) Measurement of Glass Transition Temperature Tg of Resin Plate:

The measuring instrument employed an ARES-RDS manufactured by TA Instruments.

The obtained 2 mm-thick resin plate was processed into a test piece (length 55 mm x width 12.7 mm), the storage elastic modulus G' was logarithmically plotted relative to temperature at a measurement frequency of 1 Hz and heating rate of 5°C/min, and the temperature obtained from the intersection of an approximated line of the flat region of logG' and the approximated line of the region in which G' transitions was recorded as the glass transition temperature (G'-Tg). The results are shown in Tables 2 to 4.

(2) Measurement of Flexural Property of Resin Plate

The obtained 2 mm-thick resin plate was processed into a test piece (length 60 mm x width 8 mm), and using a universal tester manufactured by Instron to which a 3-point bending jig (both indenter and support 3.2 mmR, distance between supports 32 mm) was installed, the flexural properties (flexural strength, flexural modulus, elongation during maximum load, fracture elongation) were measured at the condition of a 2 mm/min crosshead speed. The results are shown in Tables 2 to 4.

(3) Specific Gravity Measurement of Resin Plate:

After processing the obtained 2 mm-thick resin plate to the appropriate size, the weight in air and in water was measured, and the specific gravity was calculated by the Archimedes method. The results are shown in Tables 2 to 4.

(4) UL-94V Combustion Test (Resin Plate):

The obtained 2 mm-thick resin plate was processed into a test piece (length 127 mm x width 12.7 mm), and the combustion test was conducted thereon in accordance with UL-94V standard using a combustion tester manufactured by Suga Test Instruments Co., Ltd.
The complete combustion time (sec) and judgment result (V-0, V-1, V-2 and fail) were recorded. The results are shown in Tables 2 to 4.

(5) UL-94V Combustion Test (Carbon Fiber Composite Material Plate):

The obtained 0.8 mm-thick carbon fiber composite material was processed into a test piece (length 127 mm x width 12.7 mm), and the combustion test was conducted thereon in accordance with UL-94V standard using a combustion tester manufactured by Suga Test Instruments Co., Ltd. The complete combustion time (sec) and judgment result (V-0, V-1, V-2 and fail) were recorded. The results are shown in Table 3.

(6) FAR Combustion Test (Carbon Fiber Composite Material Plate):

The obtained 3.0 mm-thick carbon fiber composite material was processed into a test piece (length 150 mm x width 150 mm), and the combustion test was conducted thereon in accordance with FAR25.853 a-1 Part IV standard. The integral value at two minutes and maximum value at five minutes for the heat release rate were recorded. The results are shown in Table 3 or 4.

(7) Measurement of Flexural Property of Carbon Fiber Composite Material Plate:

The obtained 2-mm thick carbon fiber composite material plate was processed into a test piece (length 127 mm x width 12.7 mm), and using a universal tester manufactured by Instron to which a 3-point bending jig (indenter 5.0 mmR, support 3.2 mmR, distance between supports 80 mm) was installed, the flexural properties (flexural strength, flexural modulus, elongation during maximum load, fracture elongation) were measured at the condition of a 5.3 mm/min crosshead speed. The results are shown in Table 3 or 4.

(8) Measurement of ILSS (Interlaminar Shear Strength) Characteristics of Carbon Fiber Composite Material Plate:

The obtained 2 mm-thick carbon fiber composite material plate processed into a test piece (length 25.4 mm x width 6.35 mm), and measured for ILSS characteristics (strength) using a universal tester manufactured by Instron to which a 3-point bending jig (indenter 3.2 mmR, support 1.6 mmR, distance between supports 8 mm) was installed at conditions of a 1.27 mm/min crosshead speed. The results are shown in Table 3 or 4.

[Table 2]

| | | | | Example 1 | Example 2 | Example 3 | Example 4 | Example 5 | Example 6 |
|---|---|---|---|---|---|---|---|---|---|
| Resin composition | Blended amount (parts) | A-1 | (FX-289FA) | 16 | 22 | 25 | 22 | 24 | 26 |
| | | B-1 | (jER152) | 21 | 30 | 30 | 23 | 25 | 29 |
| | | B-2 | (TX-0911) | 34 | 22 | 25 | 22 | 24 | 26 |
| | | C-1 | (DICY15) | 7.5 | 7.5 | 7.5 | 7.5 | 7.5 | 7.5 |
| | | D-1 | (C-301) | 38 | 15 | 30 | 30 | 45 | 6 |
| | | E-1 | (jER1032H60) | 30 | 33 | 30 | 40 | 36 | 30 |
| | | F-1 | (DCMU99) | 5 | 5 | 5 | 5 | 5 | 5 |
| | | G-1 | (jER828) | 15 | 15 | 15 | 15 | 15 | 15 |
| | | G-1 | (jER828) | - | - | - | - | - | - |
| | | H-1 | (YP-50S) | - | - | - | - | - | - |
| | $C_A$ [%] | | | 9.6 | 14.7 | 14.9 | 13.4 | 13.2 | 18.0 |
| | $C_D$ [%] | | | 22.8 | 10.0 | 17.9 | 18.2 | 24.8 | 4.2 |
| | $2.5C_A+C_D$ | | | 46.8 | 46.8 | 55.2 | 51.7 | 57.9 | 49.1 |
| | Phosphorus content[%] | | | 0.71 | 1.09 | 1.10 | 0.99 | 0.98 | 1.33 |
| Resin plate | Specific gravity[g/m²] | | | 1.41 | 1.33 | 1.38 | 1.38 | 1.43 | - |
| | Flexural strength[MPa] | | | 148 | 164 | 153 | 152 | 132 | 182 |
| | Flexural modulus[GPa] | | | 5.3 | 4.5 | 4.9 | 5 | 5.4 | 4.2 |
| | Elongation during maximum load[%] | | | 3.2 | 4.5 | 3.5 | 3.4 | 2.6 | 5.9 |
| | Fracture elongation[%] | | | 3.2 | 4.5 | 3.5 | 3.4 | 2.6 | 5.9 |
| | Resin plate G' -Tg [°C] | | | 147 | 147 | 145 | 151 | 146 | - |
| | UL-94V flame retardancy | max [sec] | | 2 | 9 | 4 | 3 | 2 | 6 |
| | | total [sec] | | 9 | 17 | 18 | 11 | 3 | 12 |
| | | Judgment | | V-0 | V-0 | V-0 | V-0 | V-0 | V-0 |

[Table 3]

| | | | Example 7 | Example 8 | Example 9 | Example 10 | Example 11 | Example 12 | Example 13 | Example 14 | Example 15 | Example 16 |
|---|---|---|---|---|---|---|---|---|---|---|---|---|
| Resin composition | Blended amount (parts) | A-1 (FX-289FA) | 37 | 40 | 40 | 40 | 55.5 | 62.5 | 40 | 40 | 40 | 40 |
| | | B-1 (jER152) | - | - | - | - | 85 | 85 | - | - | - | - |
| | | B-2 (TX-0911) | 81 | 85 | 85 | 85 | - | - | 85 | 85 | 85 | 85 |
| | | C-1 (DICY15) | 7.5 | 7.5 | 7.5 | 7.5 | 7.5 | 7.5 | 7.5 | 7.5 | 7.5 | 7.5 |
| | | D-1 (C-301) | 50 | 30 | 50 | 40 | 11.1 | 25 | - | - | - | - |
| | | D-2 C-300GT | - | - | - | - | - | - | 40 | - | - | - |
| | | D-3 (C-305) | - | - | - | - | - | - | - | 40 | - | - |
| | | D-4 CM-450 | | | | | | | | | 40 | - |
| | | D-5 C-3250 | | | | | | | | | - | 40 |
| | | E-1 (jER1032H60) | - | - | - | - | - | - | - | - | - | - |
| | | F-1 (DCMU99) | 5 | 5 | 5 | 5 | 5 | 5 | 5 | 5 | 5 | 5 |
| | | G-1 (jER828) | 15 | 15 | 15 | 15 | 15 | 15 | 15 | 15 | 15 | 15 |
| | | G-1 (jER828) | 4 | - | - | - | - | - | - | - | - | - |
| | | H-1 (YP-50S) | 2 | - | - | - | - | - | - | - | - | - |
| | $C_A$ [%] | | 18.4 | 21.9 | 19.8 | 20.8 | 31.0 | 31.3 | 20.8 | 20.8 | 20.8 | 20.8 |
| | $C_D$ [%] | | 24.8 | 16.4 | 24.7 | 20.8 | 6.2 | 12.5 | 20.8 | 20.8 | 20.8 | 20.8 |
| | $2.5C_A+C_D$ | | 70.7 | 71.2 | 74.1 | 72.7 | 83.7 | 90.6 | 72.7 | 72.7 | 72.7 | 72.7 |
| | Phosphorus content [%] | | 1.36 | 1.62 | 1.46 | 1.54 | 2.29 | 2.31 | 1.54 | 1.54 | 1.54 | 1.54 |
| Resin plate | Specific gravity [g/m²] | | 1.43 | 1.35 | 1.44 | 1.42 | 1.32 | 1.35 | 1.40 | 1.41 | 1.41 | 1.41 |
| | Flexural strength [MPa] | | 148 | 157 | 143 | 139 | 166 | 151 | 153 | 143 | 120 | 117 |
| | Flexural modulus [GPa] | | 5.6 | 4.9 | 5.2 | 5.3 | 4.6 | 4.8 | 5.1 | 5.1 | 5.1 | 5.3 |
| | Elongation during maximum load [%] | | 2.6 | 3.5 | 2.9 | 2.9 | 3.9 | 3.4 | 3.1 | 3.0 | 2.5 | 2.3 |
| | Fracture elongation [%] | | 2.6 | 3.5 | 2.9 | 2.9 | 3.9 | 3.4 | 3.1 | 3.0 | 2.5 | 2.3 |
| | Resin plate G' -Tg [°C] | | 126 | 130 | 131 | 130 | 113 | 108 | 132 | 133 | 133 | 133 |
| | 2-mm resin plate UL-94V flame retardancy | max [sec] | 2 | 1 | 3 | 3 | 2 | 1 | 3 | 3 | 1 | 3 |
| | | total [sec] | 4 | 3 | 7 | 6 | 14 | 2 | 12 | 8 | 7 | 14 |
| | | Judgment | V-0 | V-0 | V-0 | V-0 | V-0 | V-0 | V-0 | V-0 | V-0 | V-0 |
| Prepreg | Resin film basis weight [g/m²] | | 67 | - | - | 48 | 48 | 48 | 48 | 48 | 48 | 48 |
| | Carbon fiber basis weight [g/m²] | | 200 | - | - | 225 | 225 | 225 | 225 | 225 | 225 | 225 |
| | Resin content [%] | | 40 | - | - | 30 | 30 | 30 | 30 | 30 | 30 | 30 |
| Carbon fiber composite material plate | Flexural strength [MPa] | | - | - | - | 2010 | - | - | 1970 | 1940 | 1690 | 1440 |
| | Flexural modulus [GPa] | | - | - | - | 137 | - | - | 136 | 134 | 130 | 129 |
| | ILSS[MPa] | | - | - | - | 96 | - | - | 103 | 62 | 53 | 52 |
| | UL-94V flame retardancy | max [sec] | - | - | - | 4 | 6 | 4 | 7 | 5 | 5 | 5 |
| | | total [sec] | - | - | - | 20 | 24 | 20 | 29 | 21 | 25 | 21 |
| | | Judgment | - | - | - | V-0 | V-0 | V-0 | V-0 | V-0 | V-0 | V-0 |
| | FAR25.853, a-1 Part IV standard heat generation rates | total[kw·min/m²] | 32.9 | - | - | - | 48.6 | 34 | - | - | - | - |
| | | peak[kw/m²] | 77.8 | - | - | - | 64.6 | 56.3 | - | - | - | - |

[Table 4]

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Resin composition | Blended amount (parts) | A-1 (FX-289FA) | 19.2 | 19.2 | 12.8 | 12.8 | 6 | 85 | 37 |
| | | B-1 (jER152) | - | - | - | - | 22.25 | - | - |
| | | B-2 (TX-0911) | 40.8 | 40.8 | 27.2 | 27.2 | 12.75 | 85 | 81 |
| | | C-1 (DICY15) | 7.5 | 7.5 | 7.5 | 7.5 | 7.5 | 7.5 | 7.5 |
| | | D-1 (C-301) | - | 15 | 15 | 30 | 35 | 11 | 70 |
| | | E-1 (jER1032H60) | 44.2 | 44.2 | 57.8 | 57.8 | 50 | - | - |
| | | F-1 (DCMU99) | 5 | 5 | 5 | 5 | 5 | 5 | 5 |
| | | G-1 (jER828) | 15 | 15 | 15 | 15 | 15 | 15 | 15 |
| | | G-1 (jER828) | - | - | - | - | - | - | 4 |
| | | H-1 (YP-50S) | - | - | - | - | - | - | 2 |
| | $C_A$[%] | | 14.6 | 13.1 | 9.1 | 8.2 | 3.9 | 40.8 | 16.7 |
| | $C_D$[%] | | 0.0 | 10.2 | 10.7 | 19.3 | 22.8 | 5.3 | 31.6 |
| | $2.5C_A+C_D$ | | 36.4 | 42.9 | 33.5 | 39.9 | 32.6 | 107.2 | 73.4 |
| | Phosphorus content [%] | | 1.08 | 0.97 | 0.68 | 0.61 | 0.29 | 3.02 | 1.24 |
| Resin plate | Specific gravity [g/m²] | | 1.27 | 1.33 | 1.33 | 1.39 | - | - | 1.49 |
| | Flexural strength [MPa] | | 160 | 149 | 153 | 139 | 136 | 152 | 143 |
| | Flexural modulus [GPa] | | 3.9 | 4.3 | 4.2 | 4.8 | 5.5 | 4.4 | 5.8 |
| | Elongation during maximum load [%] | | 4.6 | 4 | 4.4 | 3.3 | 2.7 | 3.5 | 2.4 |
| | Fracture elongation [%] | | 4.6 | 4 | 4.4 | 3.3 | 2.7 | 3.5 | 2.4 |
| | Resin plate G' -Tg [°C] | | 151 | 157 | 176 | 176 | - | - | 127 |
| | UL-94V flame retardancy | max [sec] | 12 | 13 | 15 | 21 | 68 | 2 | 5 |
| | | total [sec] | 37 | 48 | 42 | 102 | 174 | 4 | 12 |
| | | Judgment | V-1 | V-1 | V-1 | V-1 | fail | V-0 | V-0 |
| Prepreg | Resin film basis weight [g/m²] | | - | - | - | - | - | 48 | 67 |
| | Carbon fiber basis weight [g/m²] | | - | - | - | - | - | 225 | 200 |
| | Resin content [%] | | - | - | - | - | - | 30 | 40 |
| Carbon fiber composite material plate | FAR25.853, a-1 Part IV standard heat generation rates | total[kw·min/m²] | - | - | - | - | - | - | 22.8 |
| | | peak[kw/m²] | - | - | - | - | - | - | 62.2 |

Fig. 1 shows a graph showing the relationships between $C_A$ and $C_D$ of the epoxy resin compositions respectively prepared in Examples 1 to 12 and Comparative Examples 1 to 7. The graph is a graph with $C_A$ on the horizontal axis and $C_D$ on the vertical axis. In addition, the straight line of $2.5C_A+C_D=45$, i.e. straight line of $C_D=45-2.5C_A$, is written in the graph.

As shown in FIG. 1 and the results shown in Tables 2 to 4, the resin plates produced by curing the epoxy resin compositions of Examples 1 to 14 satisfying $2.5C_A+C_D \geqq 45$ (Formula (1)), $6 \leqq C_A \leqq 40$ (Formula (2)) and $3 \leqq C_D \leqq 30$ (Formula (3)) excelled in flame retardancy and also had favorable mechanical characteristics. In addition, the carbon fiber composite material plates produced by curing the prepreg prepared using the epoxy resin compositions prepared in Examples 10, 13 and 14 excelled in flame retardancy and also had favorable mechanical characteristics. On the other hand, Comparative Example 1 not containing the metal hydroxide (D), Comparative Examples 2 to 4 not satisfying Formula (1), and Comparative Example 5 not satisfying Formulas (1) and (2) had low flame retardancy of the resin plate. For Comparative Example 6 not satisfying Formula (2), the flame retardancy of the resin plate was favorable; however, the carbon fiber prepreg did not have suitable drape property, and did not suit the preparation of a composite material. For Comparative Example 7 not satisfying Formula (3), the flame retardancy of the resin plate was favorable; however, a prepreg assuming the appropriate form was not obtained as the carbon fiber prepreg, and did not suit the preparation of a composite material. In addition, the carbon fiber composite material plates produced by curing prepregs prepared using the epoxy resin compositions prepared in Examples 15 and 16, in which the median particle size of the aluminum hydroxide is at least the diameter of the reinforcement fiber, excelled in flame retardancy, but the mechanical characteristics declined.

INDUSTRIAL APPLICABILITY

According to the epoxy resin composition or prepreg using the epoxy resin composition of the present invention, it is possible to provide a composite material having excellent flame retardance without containing a halogen-based flame retardant, red phosphorus and phosphoric acid ester.

According to the fiber-reinforced composite material of the present invention, it is possible to achieve both excellent flame retardance and mechanical characteristics.

## Claims

1. A prepreg obtained by impregnating an epoxy resin composition containing a phosphorus compound and an aluminum hydroxide into reinforcement fibers, wherein the median particle size of the aluminum hydroxide is no more than the diameter of the reinforcement fiber.

2. A fiber-reinforced composite material obtained by curing the prepreg according to claim 1.

Fig.1

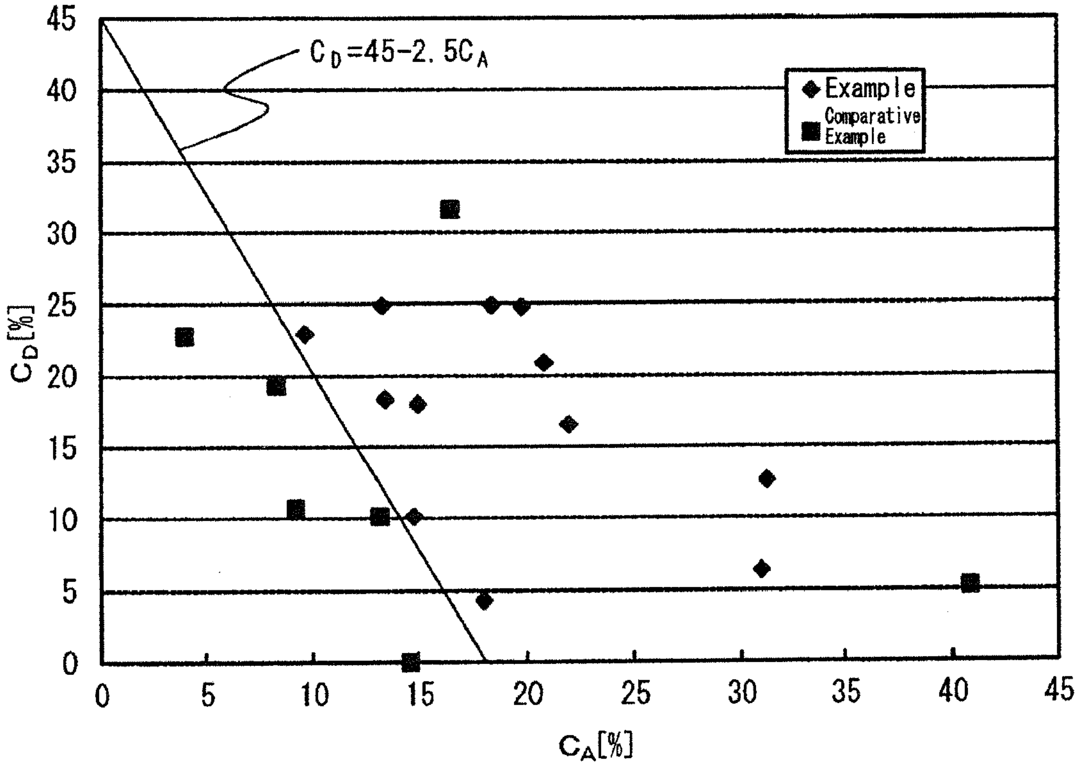
$C_D=45-2.5C_A$
Example
Comparative Example
45
40
35
30
25
20
15
10
5
0
$C_D$[%]
0
5
10
15
20
25
30
35
40
45
$C_A$[%]

Fig.2

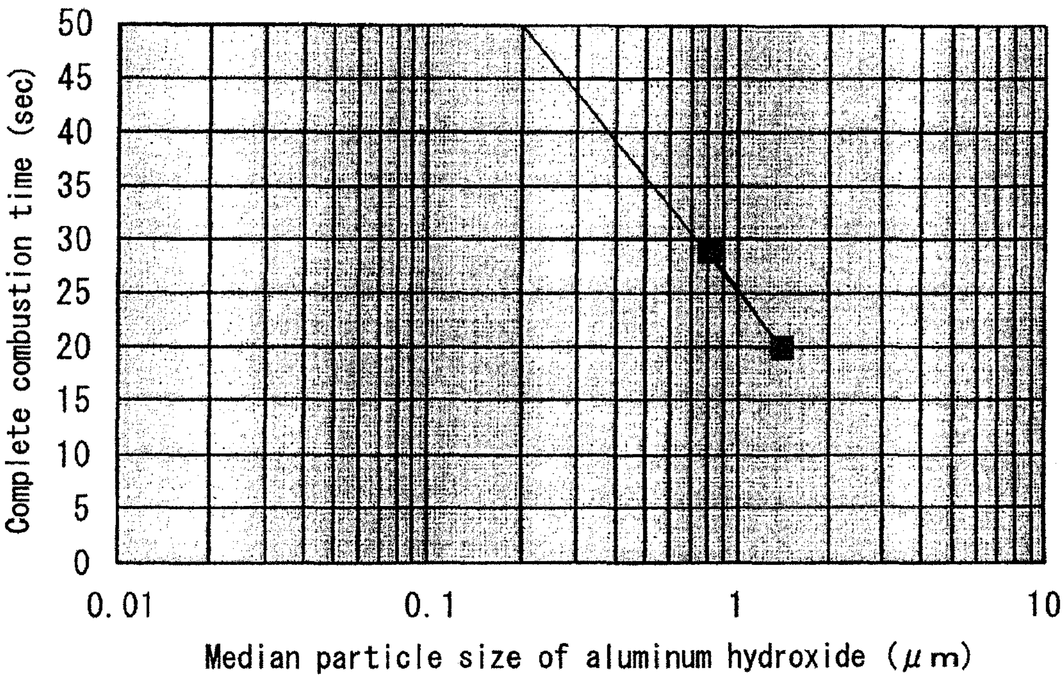
50
45
40
35
30
25
20
15
10
5
0
Complete combustion time (sec)
0.01
0.1
1
10
Median particle size of aluminum hydroxide (μm)

Europäisches Patentamt
European Patent Office
Office européen des brevets

# EUROPEAN SEARCH REPORT

Application Number
EP 16 16 0104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/044087 A1 (FUKUHARA YASUO [JP] ET AL) 25 February 2010 (2010-02-25)<br>* examples 1-12; tables 1,2 *<br>* claim 1 *<br>----- | 1,2 | INV.<br>C08K3/22<br>C08L63/00<br>C08G59/30<br>C08G59/32 |

TECHNICAL FIELDS SEARCHED (IPC)

C08G
C08K

The present search report has been drawn up for all claims

1

| Place of search | Date of completion of the search | Examiner |
|---|---|---|
| The Hague | 8 June 2016 | Siemens, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 16 0104

This annex lists the patent family members relating to the patent documents cited in the above-mentioned European search report. The members are as contained in the European Patent Office EDP file on
The European Patent Office is in no way liable for these particulars which are merely given for the purpose of information.

08-06-2016

| Patent document cited in search report | Publication date | Patent family member(s) | Publication date |
|---|---|---|---|
| US 2010044087 A1 | 25-02-2010 | JP 5554500 B2 | 23-07-2014 |
| | | KR 20100004979 A | 13-01-2010 |
| | | TW 200838928 A | 01-10-2008 |
| | | US 2010044087 A1 | 25-02-2010 |
| | | WO 2008090614 A1 | 31-07-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011030947 A
- WO 2005082982 A
- JP 170 A